# EUROPÄISCHE PATENTSCHRIFT

(11) **EP 2 617 875 B1**
(45) Veröffentlichungstag und Bekanntmachung des Hinweises auf die Patenterteilung: **17.09.2014**
(21) Anmeldenummer: 12151643.9
(22) Anmeldetag: 18.01.2012
(51) Int. Cl.: C25B 1/04, C25B 15/00, C25B 15/08

(54) **Verfahren zum Hochfahren eines Elektrolyseurs**
Method for starting an electrolyser
Procédé de démarrage d'un électrolyseur

(43) Veröffentlichungstag der Anmeldung: 24.07.2013
(73) Patentinhaber: H-TEC Systems GmbH, 23558 Lübeck (DE)
(72) Erfinder: Mantai, Nils, 23560 Lübeck (DE); Würfel, Claus, 23558 Lübeck (DE); Wilken, Dennis, 23847 Kastorf (DE); Küter, Uwe, 23660 Lübeck (DE); Höller, Stefan, 23552 Lübeck (DE)
(74) Vertreter: Patentanwälte Vollmann & Hemmer

(56) Entgegenhaltungen:
- EP-A1- 2 377 972
- JP-A- 2007 100 204
- US-A1- 2010 051 473

## Beschreibung

Die Erfindung betrifft ein Verfahren zum Hochfahren einer Elektrolyseeinrichtung gemäß den im Oberbegriff des Anspruchs 1 angegebenen Merkmalen sowie eine Elektrolyseeinrichtung gemäß dem Oberbegriff des Anspruchs 8.

Zur Wasserstoffherstellung werden nach dem Stand der Technik Elektrolyseeinrichtungen eingesetzt, welche einen Elektrolyseur zur elektrolytischen Zerlegung von Wasser zu Wasserstoff und Sauerstoff verwenden.

US 2010/051473 offenbart ein System zur Wasserstoffproduktion, welches mit einer Elektrolyseeinrichtung ausgestattet ist, in welcher mittels Elektrolyse Wasserstoff aus Wasser gewonnen wird. Insbesondere ist die Elektrolyseeinrichtung dazu ausgelegt, um hochreinen Wasserstoff mit einem Sauerstoffgehalt unterhalb von 1 ppm zu erzeugen. Das unter hohem Druck stehende Wasserstoffgas enthält, wenn es die Elektrolyseeinrichtung verlässt, Wasserdampf, welcher in einem stromabwärts der Elektrolyseeinrichtung angeordneten Gas-Flüssigkeits-Separator von dem Wasserstoffgas getrennt wird. Beim Starten der Elektrolyseeinrichtung ist der Wasserstoffdruck niedrig, so dass sich eine erhöhte Sauerstoffkonzentration in dem Gas ergibt. Daher wird das Gas, bis eines Druck von 1 MPa erreicht hat, über ein Magnetventil abgelassen. Erst wenn das Gas den gewünschten Reinheitsgrad erreicht hat, d. h. oberhalb eines Drucks von 1 MPa, wird es zum Entfernen des Wasserdampfes dann wieder dem Gas-Flüssigkeits-Separator zugeführt, indem das Magnetventil wieder geschlossen wird.

Bei Elektrolyseeinrichtungen, bei denen es auf einen besonders niedrigen Sauerstoffgehalt im erzeugten Wasserstoff ankommt, ist es auch bekannt, einen Reaktorbehälter mit einer Katalysatorschüttung ("Deoxi") vorzusehen, in welchem der Sauerstoff mit dem Wasserstoff zu Wasser reagiert, welches dann aus dem System abgeführt wird. Da der Reaktorbehälter mit geschütteten Katalysatoren arbeitet, stellt er eine mögliche Zündquelle dar. Daher zählt es zum Stand der Technik, vor der Inbetriebnahme der Elektrolyseeinrichtung den Reaktorbehälter und das gesamte System mit Stickstoff oder einem anderen Gas zur Inertisierung des Reaktorbehälters und des Systems zu spülen, was dann die Bildung eines explosionsgefährlichen Gasgemisches verhindert.

Nachteilig ist hierbei jedoch die aufwändige Bereitstellung des Stickstoffs zum Spülen.

Daher ist es eine Aufgabe der vorliegenden Erfindung, ein Verfahren zum sicheren Hochfahren einer Elektrolyseeinrichtung sowie eine entsprechende Elektrolyseeinrichtung bereitzustellen, bei welchen auf die Spülung mit Stickstoff oder eines anderen Gases zur Inertisierung des Reaktorbehälters und des Systems verzichtet werden kann.

Diese Aufgabe wird gemäß der Erfindung durch ein Verfahren zum Hochfahren einer Elektrolyseeinrichtung mit den Merkmalen gemäß des Anspruchs 1 sowie eine Elektrolyseeinrichtung mit den Merkmalen gemäß des Anspruchs 8 gelöst. Vorteilhafte Weiterbildungen der Erfindung sind in den Unteransprüchen sowie der nachfolgenden Beschreibung angegeben. Diese Aufgabe wird gemäß der Erfindung alternativ oder in Kombination mit einem Verfahren gemäß Anspruch 2 gelöst. Eine entsprechende Elektrolyseeinrichtung ist durch die Merkmale des Anspruchs 9 definiert.

Erfindungsgemäß wird ein Verfahren zum Hochfahren einer Elektrolyseeinrichtung bereitgestellt, welche einen stromabwärts des Elektrolyseurs angeordneten Reaktorbehälter umfasst, in welchem Sauerstoff mit Wasserstoff zu Wasser reagiert, um einen Sauerstoffanteil in einem von dem Elektrolyseur kommenden Wasserstoffgasstrom zu reduzieren, wobei die Elektrolyseeinrichtung bei einem vorbestimmten Betriebsdruck arbeitet, wobei beim Hochfahren der Elektrolyseeinrichtung der von dem Elektrolyseur kommende Wasserstoffgasstrom an dem Reaktorbehälter über eine Bypassleitung vorbeigeleitet wird.

Grundgedanke der vorliegenden Erfindung ist es, den Reaktorbehälter nicht wie aus dem Stand der Technik bekannt, durch ein Inertgas zu spülen, sondern beim Hochfahren der Elektrolyseeinrichtung, insbesondere des Elektrolyseurs, den nachgeschalteten Reaktorbehälter zu umgehen, bis der Prozess stabil läuft und nicht mehr die Gefahr eines explosiven Gemisches besteht, das im Reaktorbehälter gezündet werden kann. Dies hat den Vorteil, dass beim Hochfahren der Eleltrolyseeinrichtung, insbesondere des Elektrolyseurs auf die sonst aufwändige Inertgasspülung verzichtet werden kann. Der gerätemäßige Aufwand ist vergleichsweise gering. Es ist lediglich eine Bypassleitung zum Reaktor mit entsprechenden Ventilen vorzusehen, die in einfachster Weise als Absperrventile in der Bypassleitung und vor dem Reaktorbehälter ausgebildet sein können, auf eine ausgangsseitige Absperreinrichtung, insbesondere am Reaktorbehälter, kann in der Regel verzichtet werden.

Alternativ oder in Kombination mit dem Verfahren gemäß Anspruch 1 wird der vorbestimmte Betriebsdruck in dem Reaktorbehälter vor dem Hochfahren auf einen Druck unterhalb des Umgebungsdrucks, insbesondere auf einen Druck unterhalb von 0,5 bar, abgesenkt. Die Absenkung des Drucks innerhalb des Reaktorbehälters dient dazu, einen eventuellen Druckanstieg im Falle einer Explosion abzufedern. Da im Falle einer Explosion der Druck etwa um das 10fache ansteigt, kann bei entsprechender Absenkung des Drucks auch ein möglicher Druckanstieg entsprechend abgesenkt werden. Die Anlage kann dann konstruktionstechnisch für einen geringeren Druck ausgelegt sein. Es kann also gemäß der Erfindung statt des Hochfahrens mittels einer den Reaktorbehälter umgehenden Bypassleitung ein Hochfahren gegebenenfalls ohne eine solche Bypassleitung erfolgen, wenn zuvor der Druck im Reaktorbehälter bzw. in den damit Leitungsverbundenen Systemkomponenten entsprechend gesenkt wird. Besonders vorteilhaft ist es, beide Maßnahmen in Kombination anzuwenden.

Gemäß einem weiteren bevorzugten Ausführungsbeispiel wird beim Hochfahren der Elektrolyseeinrichtung, insbesondere des Elektrolyseurs ein erstes Ventil, welches in der Bypassleitung angeordnet ist, geöffnet, um den von dem Elektrolyseur kommenden Wasserstoffgasstrom an dem Reaktorbehälter vorbeizuleiten, und ein zweites Ventil, welches in einer Zuführleitung zu dem Reaktorbehälter angeordnet ist, wird geschlossen.

Vorzugsweise wird beim Überschreiten der oberen Explosionsgrenze des Wasserstoffs in dem Wasserstoffgasstrom das erste Ventil geschlossen und das zweite Ventil geöffnet, so dass der Wasserstoffgasstrom dem Reaktorbehälter zugeführt wird.

Das Überschreiten der oberen Explosionsgrenze kann gemäß der Erfindung durch Messung des Sauerstoffgehalts in der zu dem Reaktorbehälter führenden Leitung ermittelt werden. Anlagentechnisch weniger aufwändig ist eine alternativ gemäß der Erfindung vorgesehene zeitlich gesteuerte Spülung der zum Reaktorbehälter führenden Leitung mit Wasserstoffgas, welches im Elektrolyseur erzeugt wird. Dabei ist die Spülmenge so zu dimensionieren, dass der Explosionsbereich zuverlässig ausgeschlossen werden kann, was insbesondere dann der Fall ist, wenn mit einer Spülmenge gearbeitet wird, die mindestens dem fünffachen Nennvolumen der Leitung zum Reaktorbehälter entspricht.

Vorteilhaft ist der vorbestimmte Betriebsdruck größer als 5 bar, insbesondere größer als 30 bar und liegt vorzugsweise in einem Druckbereich von 50 bis 100 bar. Ein hoher Betriebsdruck hat den Vorteil, dass der austretende Wasserstoff ohne weitere Pumpen verarbeitet werden kann, d. h. beispielsweise in Druckspeichern oder chemischen Speichern eingelagert werden kann.

Besonders bevorzugt ist es, wenn beim Hochfahren der Elektrolyseeinrichtung Systembaugruppen, insbesondere eine erste Baugruppe zur Gasaufbereitung, welche stromaufwärts des Reaktorbehälters angeordnet ist, und eine zweite Baugruppe zur Gasaufbereitung, welche stromabwärts des Reaktorbehälters angeordnet ist, von dem von dem Elektrolyseur kommenden Wasserstoffgasstrom unter Umgehung des Reaktorbehälters durchströmt werden.

Gemäß der Erfindung wird eine Elektrolyseeinrichtung mit einem Elektrolyseur und einem Reaktorbehälter, in welchem Sauerstoff mit Wasserstoff zu Wasser reagiert, bereitgestellt, wobei in der Elektrolyseeinrichtung eine Bypassleitung zum Vorbeileiten eines von dem Elektrolyseur kommender Wasserstoffgasstroms an dem Reaktorbehälter vorgesehen ist.

Gemäß der Erfindung ist alternativ zur Bypassleitung oder zusätzlich eine Vakuumpumpe zum Absenken eines vorbestimmten Betriebsdrucks in dem Reaktorbehälter auf einen Druck unterhalb des Umgebungsdrucks, insbesondere auf einen Druck unterhalb von 0,5 bar, vorgesehen.

Zweckmäßigerweise ist der Reaktorbehälter in der Elektrolyseeinrichtung stromabwärts des Elektrolyseurs angeordnet.

Gemäß einer weiteren bevorzugten Ausführungsform sind ein erstes Ventil, insbesondere ein Absperrventil, in der Bypassleitung und ein zweites Ventil, insbesondere ein Absperrventil, in einer Zuführleitung zu dem Reaktorbehälter vorgesehen.

Alternativ kann auch ein Wegeventil, insbesondere ein 3/2-Wegeventil, in der Zuführleitung zu dem Reaktorbehälter vorgesehen sein, welches die Zuführleitung wahlweise mit dem Reaktorbehälter oder der Bypassleitung verbindet.

Gemäß einer weiteren bevorzugten Ausführung ist der Elektrolyseur ein Druckelektrolyseur, insbesondere ein Protonen-Austausch-Membran-Elektrolyseur, wobei der vorbestimmte Betriebsdruck, mit welchem der Elektrolyseur arbeitet, größer als 5 bar, insbesondere größer als 30 bar. Besonders bevorzugt liegt der vorbestimmte Betriebsdruck in einem Druckbereich von 50 bis 100 bar.

Vorzugsweise enthält der Reaktorbehälter eine Katalysatorschüttung.

Durch das erfindungsgemäße Verfahren kann die Elektrolyseeinrichtung sicher und ohne das aufwändige Spülen mit einem Inertgas des Reaktorbehälters hochgefahren werden. Es wird lediglich eine Bypassleitung, welche mittels entsprechend angeordneter Ventile geöffnet und geschlossen werden kann, parallel zu dem Reaktorbehälter vorgesehen, durch die das vom Elektrolyseur produzierte Wasserstoffgas umgeleitet wird, bis die obere Explosionsgrenze überschritten wird. Währenddessen werden andere Systembaugruppen mit Wasserstoff gespült, bis dann nach dem erwähnten Überschreiten der oberen Explosionsgrenze Wasserstoffgas auch in den Reaktorbehälter eingeleitet wird. Weiter minimiert werden kann das Risiko beim Hochfahren der Elektrolyseeinrichtung noch, wenn der in dem Reaktorbehälter vorhandene Druck mittels einer Vakuumpumpe auf einen Druck unterhalb des Umgebungsdrucks abgesenkt wird, so dass bei Bildung eines zündfähigen Gemischs und anschließender Entzündung der Deflagrations- bzw. Detonationsdruck entsprechend reduziert ist und somit unterhalb des zulässigen Betriebsdrucks bleibt. Wird der Reaktorbehälter auf einen Druck kleiner als 0,5 bar evakuiert, dann entsteht bei einer möglicherweise auftretenden Detonation (Knallgasreaktion) ein maximaler Druck unterhalb von 5 bar, so dass der minimale Betriebsdruck der Elektrolyseeinrichtung dabei nicht überschritten wird.

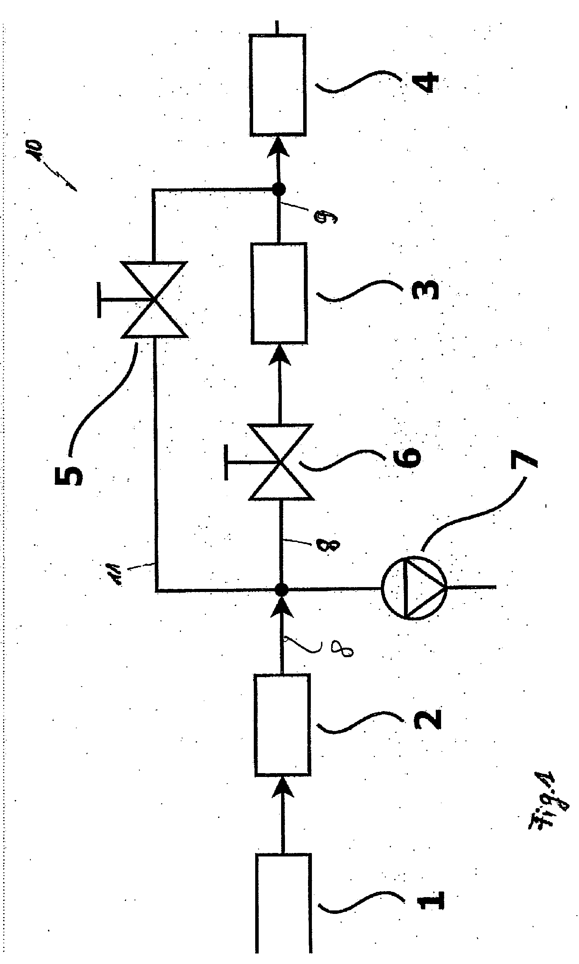

Die Erfindung ist nachfolgend anhand eines in der Zeichnung dargestellten Ausführungsbeispiels näher erläutert. Die Figur zeigt eine schematische Darstellung eines Abschnitts einer Elektrolyseeinrichtung gemäß einer Ausführungsform der Erfindung.

Bezugszeichen 1 kennzeichnet einen Elektrolyseur, welcher hier in der Ausführungsform als Protonen-Austausch-Membran-Elektrolyseur (PEM) ausgebildet ist. In dem Elektrolyseur 1 wird Wasser in Wasserstoff und Sauerstoff elektrolytisch zerlegt. Durch Diffusion durch die Membran des Elektrolyseurs 1 gelangt bei diesem Verfahren jedoch in geringen mengen auch Sauerstoff in den Wasserstoff, so dass in dem so produzierten Wasserstoff noch ein Restanteil an Sauerstoff mit einem Anteil von 10 bis 100 ppm vorhanden ist.

Bei der Elektrolyseeinrichtung 10 gemäß der hier dargestellten Ausführungsform kommt es auf einen niedrigen Sauerstoffgehalt im erzeugten Wasserstoff an. Daher ist neben verschiedenen Baugruppen 2, 4 zur weiteren Gasaufbereitung, wie beispielsweise die erste Baugruppe 2 zur Gasaufbereitung, in der Wasser aus dem Wasserstoffgasstrom entfernt und aus der Elektrolyseeinrichtung 10 abgeleitet wird, ein Reaktorbehälter 3 stromabwärts des Elektrolyseurs 1 und der ersten Baugruppe 2 zur Gasaufbereitung angeordnet, in welchem der noch im Wasserstoffgasstrom unerwünschte Sauerstoff auf bis zu 1 ppm reduziert wird.

Es handelt sich um einen Reaktorbehälter 3 mit einer Katalysatorschüttung, in welchem der Sauerstoff mit dem Wasserstoff zu Wasser reagiert, welches anschließend ebenfalls aus der Elektrolyseeinrichtung 10 entfernt wird. Da der Reaktorbehälter 3 mit einer Katalysatorschüttung arbeitet, stellt dieser auch eine mögliche Zündquelle dar. Daher wird beim Hochfahren der Elektrolyseeinrichtung 10 zunächst der Reaktorbehälter 3 mittels einer Vakuumpumpe 7 auf einen Druck unterhalb des Umgebungsdrucks, hier auf einen Druck unterhalb 0,5 bar, evakuiert. Gleichzeitig wird ein erstes Ventil 5 geöffnet, welches hier als Absperrventil ausgebildet und in einer Bypassleitung 11 angeordnet ist, welche zum Umgehen des Reaktorbehälters 3 von einer ersten Zuführleitung 8 zu dem Reaktorbehälter 3 abzweigt und stromabwärts des Reaktorbehälters 3 erst wieder in einen Leitungsabschnitt 9 eingeleitet wird, welcher von einem Ausgang des Reaktorbehälters 3 zu einer zweiten Baugruppe 4 zur Gasaufbereitung führt. Ein zweites Ventil 6, welches in der Zuführleitung 8 zu dem Reaktorbehälter 3 angeordnet ist und welches ebenfalls als Absperrventil ausgebildet ist, wird gleichzeitig geschlossen, so dass der von dem Elektrolyseur 1 und der ersten Baugruppe 2 zur Gasaufbereitung kommende Wasserstoffgasstrom nicht den Reaktorbehälter 3 sondern die Bypassleitung 11 durchströmt, um stromabwärts des Reaktorbehälters 3 der zweiten Baugruppe 4 zur Gasaufbereitung zugeführt zu werden.

Nach Überschreiten der oberen Explosionsgrenze wird das erste Ventil 5, welches in der Bypassleitung 11 angeordnet ist, geschlossen und gleichzeitig das zweite Ventil 6, welches in der Zuführleitung 8 zu dem Reaktorbehälter 3 angeordnet ist, geöffnet, so dass der Reaktorbehälter 3 von dem Wasserstoffgasstrom durchströmt wird. Zum sicheren Überschreiten der oberen Explosionsgrenze wird eine zeitlich gesteuerte Spülung mit Wasserstoffgas mit der fünffachen Spülmenge des Nennvolumens der Zuführleitung 8 durchgeführt. Alternativ kann die obere Explosionsgrenze jedoch auch durch eine Messung des Sauerstoffgehalts in dem Wasserstoffgasstrom ermittelt werden.

Alternativ kann anstelle der Absperrventile 5 und 6 auch ein 3/2-Wegeventil verwendet werden. Ein solches 3/2-Wegeventil verbindet die Zuführleitung 8 entweder mit der Bypassleitung 11 oder dem Reaktorbehälter 3.

Gegebenenfalls kann bei den vorbeschriebenen Anordnungen ein weiteres Absperrventil stromabwärts des Reaktorbehälters 3 vorgesehen sein. Auch kann stromabwärts ein weiteres 3/2-Wegeventil vorgesehen sein, welches die Bypassleitung und den vom Reaktorbehälter 3 kommenden Leitungsabschnitt 9 mit einer zur zweiten Baugruppe 4 führenden Leitung verbindet. Dieses zweite Wegeventil wird zweckmäßigerweise synchron mit dem ersten Wegeventil geschaltet.

### Bezugszeichenliste

- 1: Elektrolyseur
- 2: erste Baugruppe zur Gasaufbereitung
- 3: Reaktorbehälter ("Deoxi")
- 4: zweite Baugruppe zur Gasaufbereitung
- 5: erstes Ventil
- 6: zweites Ventil
- 7: Pumpe
- 8: Zuführleitung
- 9: Leitungsabschnitt
- 10: Elektrolyseeinrichtung
- 11: Bypassleitung

## Patentansprüche

1. Verfahren zum Hochfahren einer Elektrolyseeinrichtung (10), welche einen stromabwärts eines Elektrolyseurs (1) angeordneten Reaktorbehälter (3) mit einer Katalysatorschüttung umfasst, in welchem Sauerstoff mit Wasserstoff zu Wasser reagiert, um einen Sauerstoffanteil in einem von dem Elektrolyseur (1) kommenden Wasserstoffgasstrom zu reduzieren, wobei die Elektrolyseeinrichtung (10) bei einem vorbestimmten Betriebsdruck arbeitet, wobei beim Hochfahren des Elektrolyseurs (1) der von dem Elektrolyseur (1) kommende Wasserstoffgasstrom an dem Reaktorbehälter (3) über eine Bypassleitung (11) vorbeigeleitet wird.

2. Verfahren nach Anspruch 1 oder nach dem Oberbegriff des Anspruchs 1, **dadurch gekennzeichnet, dass** der vorbestimmte Betriebsdruck in dem Reaktorbehälter (3) vor dem Hochfahren auf einen Druck unterhalb des Umgebungsdrucks, insbesondere auf einen Druck unterhalb von 0,5 bar, abgesenkt wird.

3. Verfahren nach Anspruch 1 oder 2, **dadurch gekennzeichnet, dass** beim Hochfahren der Elektrolyseeinrichtung (10) ein erstes Ventil, (5) welches in der Bypassleitung (11) angeordnet ist, geöffnet wird, um den von dem Elektrolyseur (1) kommenden Wasserstoffgasstrom an dem Reaktorbehälter (3) vorbeizuleiten, und ein zweites Ventil (6), welches in einer Zuführleitung (8) zu dem Reaktorbehälter (3) angeordnet ist, geschlossen wird.

4. Verfahren nach Anspruch 3, **dadurch gekennzeichnet, dass** beim Überschreiten der oberen Explosionsgrenze des Wasserstoffs in dem Wasserstoffgasstrom das erste Ventil (5) geschlossen wird und das zweite Ventil (6) geöffnet wird, so dass der Wasserstoffgasstrom dem Reaktorbehälter (3) zugeführt wird.

5. Verfahren nach Anspruch 4, **dadurch gekennzeichnet, dass** die obere Explosionsgrenze bestimmt wird durch eine Messung des Sauerstoffgehalts in der Leitung (8) zu dem Reaktorbehälter (3) oder durch eine zeitlich gesteuerte Spülung der zum Reaktorbehälter (3) führenden Leitung (8) mit Wasserstoffgas mit einer Spülmenge, welche vorzugsweise mindestens dem 5fachen Nennvolumen der Leitung (8) entspricht.

6. Verfahren nach einem der Ansprüche 1 bis 5, **dadurch gekennzeichnet, dass** der vorbestimmte Betriebsdruck größer als 5 bar, insbesondere größer als 30 bar, ist und vorzugsweise in einem Druckbereich von 50 bis 100 bar liegt.

7. Verfahren nach einem der Ansprüche 1 bis 6, **dadurch gekennzeichnet, dass** beim Hochfahren der Elektrolyseeinrichtung (10) Systembaugruppen, insbesondere eine erste Baugruppe (2) zur Gasaufbereitung, welche stromaufwärts des Reaktorbehälters (3) angeordnet ist, und eine zweite Baugruppe (4) zur Gasaufbereitung, welche stromabwärts des Reaktorbehälters (3) angeordnet ist, von dem von dem Elektrolyseur (1) kommenden Wasserstoffgasstrom unter Umgehung des Reaktorbehälters (3) durchströmt werden.

8. Elektrolyseeinrichtung (10) mit einem Elektrolyseur (1) und einem Reaktorbehälter (3) mit einer Katalysatorschüttung, in welchem Sauerstoff mit Wasserstoff zu Wasser reagiert, wobei in der Elektrolyseeinrichtung (10) eine Bypassleitung (11) zum Vorbeileiten eines von dem Elektrolyseur (1) kommender Wasserstoffgasstroms an dem Reaktorbehälter (3) vorgesehen ist.

9. Elektrolyseeinrichtung (10) nach Anspruch 8 oder nach dem Oberbegriff des Anspruchs 8, **dadurch gekennzeichnet, dass** eine Pumpe (7), insbesondere eine Vakuumpumpe, zum Absenken eines vorbestimmten Betriebsdrucks in dem Reaktorbehälter (3) auf einen Druck unterhalb des Umgebungsdrucks, insbesondere auf einen Druck unterhalb von 0,5 bar, vorgesehen ist.

10. Elektrolyseeinrichtung (10) nach Anspruch 8 oder 9, **dadurch gekennzeichnet, dass** der Reaktorbehälter (3) in der Elektrolyseeinrichtung (10) stromabwärts des Elektrolyseurs (1) angeordnet ist.

11. Elektrolyseeinrichtung (10) nach einem der Ansprüche 8 bis 10, **dadurch gekennzeichnet, dass** ein erstes Ventil (5), insbesondere ein Absperrventil, in der Bypassleitung (11), und ein zweites Ventil (6), insbesondere ein Absperrventil, in einer Zuführleitung (8) zu dem Reaktorbehälter (3) vorgesehen sind.

12. Elektrolyseeinrichtung (10) nach einem der Ansprüche 8 bis 10, **dadurch gekennzeichnet, dass** ein Wegeventil, insbesondere ein 3/2-Wegeventil, in der Zuführleitung (8) zu dem Reaktorbehälter (3) vorgesehen ist.

13. Elektrolyseeinrichtung (10) nach einem der Ansprüche 8 bis 12, **dadurch gekennzeichnet, dass** der Elektrolyseur (1) ein Druckelektrolyseur, insbesondere ein Protonen-Austausch-Membran-Elektrolyseur, ist, wobei der vorbestimmte Betriebsdruck, mit welchem der Elektrolyseur (1) arbeitet, größer als 5 bar, insbesondere größer als 30 bar, ist.

14. Elektrolyseeinrichtung (10) nach einem der Ansprüche 8 bis 13, **dadurch gekennzeichnet, dass** der vorbestimmte Betriebsdruck in einem Druckbereich von 50 bis 100 bar liegt.

## Claims

1. A method for running up an electrolysis device (10) which comprises a reactor container (3) having a catalyst charge and being arranged downstream of an electrolyser (1), in which reactor container oxygen reacts with hydrogen into water, in order to reduce an oxygen share in a hydrogen gas flow coming from the electrolyser (1), wherein the electrolysis device (10) operates at a predefined operating pressure, wherein on running up the electrolyser (1), the hydrogen gas flow coming from the electrolyser (1) is led past the reactor container (3) via a bypass conduit (11).

2. A method according to claim 1, or according to the preamble of claim 1, **characterised in that** the predefined operating pressure in the reactor container (3) is lowered to a pressure below the ambient pressure, in particular to a pressure below 0.5 bar, before the running-up.

3. A method according to claim 1 or 2, **characterised in that** on running-up the electrolysis device (10), a first valve (5) which is arranged in the bypass conduit (11) is opened, in order to lead the hydrogen gas flow coming from the electrolyser (1) past the reactor container (3), and a second valve (6) which is arranged in a feed conduit (8) to the reactor container (3) is closed.

4. A method according to claim 3, **characterised in that** on exceeding the upper explosion limit of the hydrogen in the hydrogen gas flow, the first valve (5) is closed and the second valve (6) is opened, so that the hydrogen gas flow is fed to the reactor container (3).

5. A method according to claim 4, **characterised in that** the upper explosion limit is determined by way of a measurement of the oxygen content in the conduit (8) to the reactor container (3) or by way of a temporally controlled flushing of the conduit (8) leading to the reactor container (3) with hydrogen gas, with a flushing quantity which preferably corresponds at least to five-fold the rated volume of the conduit (8).

6. A method according to one of the claims 1 to 5, **characterised in that** the predefined operating pressure is greater than 5 bar, in particular greater than 30 bar and preferably lies in a pressure region of 50 to 100 bar.

7. A method according to one of the claims 1 to 6, **characterised in that** on running up the electrolysis device (10), system subassemblies, in particular a first subassembly (2) for gas processing and which is arranged upstream of the reactor container (3), and a second subassembly (4) for gas processing and which is arranged downstream of the reactor container (3) are subjected to throughflow by the hydrogen gas flow coming from the electrolyser (1), whilst bypassing the reactor container (3).

8. An electrolysis device (10) with an electrolyser (1) and with a reactor container (3) having a catalyst charge, in which reactor container oxygen reacts with hydrogen into water, wherein a bypass conduit (11) for leading a hydrogen gas flow coming from the electrolyser (1) past the reactor container (3), is provided in the electrolysis device (10).

9. An electrolysis device (10) according to claim 8 or according to the preamble of claim 8, **characterised in that** a pump (7), in particular a vacuum pump is provided for lowering a predefined operating pressure in the reactor container (3), to a pressure below the ambient pressure, in particular to a pressure below 0.5 bar.

10. An electrolysis device (10) according to claim 8 or 9, **characterised in that** the reactor container (3) is arranged in the electrolysis device (10), downstream of the electrolyser (1).

11. An electrolysis device (10) according to one of the claims 8 to 10, **characterised in that** a first valve (5), in particular a shut-off valve is provided in the bypass conduit (11), and a second valve (6), in particular a shut-off valve, is provided in a feed conduit (8) to the reactor container (3).

12. An electrolysis device (10) according to one of the claims 8 to 10, **characterised in that** a directional control valve, in particular a 3/2-way valve is provided in the feed conduit (8) to the reactor container (3).

13. An electrolysis device (10) according to one of the claims 8 to 12, **characterised in that** the electrolyser (1) is a pressure electrolyser, in particular a proton exchange membrane electrolyser, wherein the predefined operating pressure, at which the electrolyser (1) operates, is greater than 5 bar, in particular greater than 30 bar.

14. An electrolysis device (10) according to one of the claims 8 to 13, **characterised in that** the predefined operating pressure lies in a pressure region of 50 to 100 bar.

## Revendications

1. Procédé de mise en marche d'un dispositif d'électrolyse (10) comprenant un récipient de réacteur (3) muni d'un lit de catalyseur, disposé en aval d'un électrolyseur (1) et dans lequel de l'oxygène réagit avec de l'hydrogène en formant de l'eau, visant à réduire une proportion d'oxygène contenu dans un courant d'hydrogène gazeux arrivant de l'électrolyseur (1), dans lequel le dispositif d'électrolyse (10) travaille à une pression de fonctionnement prédéterminée, et dans lequel, lors de la mise en marche de l'électrolyseur (1), le courant d'hydrogène gazeux arrivant de l'électrolyseur (1) est conduit en dérivation par rapport au récipient de réacteur (3) au moyen d'une conduite de dérivation (11).

2. Procédé selon la revendication 1 ou selon le préambule de la revendication 1, **caractérisé en ce que** la pression de fonctionnement prédéterminée à l'intérieur du récipient de réacteur (3) est abaissée avant la mise en marche à une pression inférieure à la pression ambiante, en particulier abaissée à une pression inférieure à 0,5 bars.

3. Procédé selon la revendication 1 ou 2, **caractérisé en ce que**, lors de la mise en marche du dispositif d'électrolyse (10), une première vanne (5) qui est disposée dans la conduite de dérivation (11) s'ouvre pour conduire le courant d'hydrogène gazeux arrivant de l'électrolyseur (1) en dérivation par rapport au récipient de réacteur (3), et une seconde vanne (6) qui est disposée dans une conduite d'amenée (8) menant au récipient de réacteur (3) se ferme.

4. Procédé selon la revendication 3, **caractérisé en ce que**, lors d'un dépassement de la limite supérieure d'explosion de l'hydrogène dans le courant d'hydrogène gazeux, la première vanne (5) se ferme et la seconde vanne (6) s'ouvre, de sorte que le courant d'hydrogène gazeux est envoyé au récipient de réacteur (3).

5. Procédé selon la revendication 4, **caractérisé en ce que** la limite supérieure d'explosion est déterminée par une mesure de la teneur en oxygène dans la conduite (8) menant au récipient de réacteur (3) ou par un balayage commandé dans le temps de la conduite (8) menant au récipient de réacteur (3) au moyen d'hydrogène gazeux, la quantité de balayage correspondant de préférence à au moins 5 fois le volume nominal de la conduite (8).

6. Procédé selon l'une des revendications 1 à 5, **caractérisé en ce que** la pression de fonctionnement prédéterminée est supérieure à 5 bars, en particulier supérieure à 30 bars, et de préférence située dans une plage de pression allant de 50 à 100 bars.

7. Procédé selon l'une des revendications 1 à 6, **caractérisé en ce que**, lors de la mise en marche du dispositif d'électrolyse (10), des groupes constitutifs du système, en particulier un premier groupe constitutif (2) destiné à la préparation du gaz, qui est disposé en amont du récipient de réacteur (3), et un second groupe constitutif (4) destiné à la préparation du gaz, qui est disposé en aval du récipient de réacteur (3) sont parcourus par le courant d'hydrogène gazeux arrivant de l'électrolyseur (1) en dérivation par rapport au récipient de réacteur (3).

8. Dispositif d'électrolyse (10) comprenant un électrolyseur (1) et un récipient de réacteur (3) muni d'un lit de catalyseur, dans lequel de l'oxygène réagit avec de l'hydrogène en formant de l'eau, dans lequel il est prévu dans le dispositif d'électrolyse (10), une conduite de dérivation (11) servant à conduire un courant d'hydrogène gazeux arrivant de l'électrolyseur (1) en dérivation par rapport au récipient de réacteur (3).

9. Dispositif d'électrolyse (10) selon la revendication 8 ou selon le préambule de la revendication 8, **caractérisé en ce qu'**une pompe (7), de préférence une pompe à vide, est prévue pour ramener une pression de fonctionnement prédéterminée à l'intérieur du récipient de réacteur (3) à une pression inférieure à la pression ambiante, en particulier à une pression inférieure à 0,5 bar.

10. Dispositif d'électrolyse (10) selon la revendication 8 ou 9, **caractérisé en ce que** le récipient de réacteur (3) est disposé en aval de l'électrolyseur (1) dans le dispositif d'électrolyse (10).

11. Dispositif d'électrolyse (10) selon l'une des revendications 8 à 10, **caractérisé en ce qu'**une première vanne (5), en particulier une vanne d'arrêt, est prévue dans la conduite de dérivation (11) et une seconde vanne (6), en particulier une vanne d'arrêt, est prévue dans une conduite d'amenée (8) menant au récipient de réacteur (3).

12. Dispositif d'électrolyse (10) selon l'une des revendications 8 à 10, **caractérisé en ce qu'**un distributeur, en particulier un distributeur 3/2 est prévu dans la conduite d'amenée (8) menant au récipient de réacteur (3).

13. Dispositif d'électrolyse (10) selon l'une des revendications 8 à 12, **caractérisé en ce que** l'électrolyseur (1) est un électrolyseur à pression, en particulier un électrolyseur à membrane échangeuse de protons, la pression de fonctionnement prédéterminée à laquelle l'électrolyseur (1) travaille étant supérieure à 5 bars, en particulier supérieure à 30 bars.

14. Dispositif d'électrolyse (10) selon l'une des revendications 8 à 13, **caractérisé en ce que** la pression de fonctionnement prédéterminée est située dans une plage de pression allant de 50 à 100 bars.
